# EUROPEAN PATENT APPLICATION

(11) **EP 4 258 447 A1**
(43) Date of publication of application: **11.10.2023**
(21) Application number: 22833361.3
(22) Date of filing: 30.03.2022
(51) Int. Cl.: H01M 50/358, H01M 50/317, H01M 50/211, H01M 50/209

(54) **BATTERY PACK AND DEVICE INCLUDING SAME**

(30) Priority: 29.06.2021 KR 20210085132
(71) Applicant: LG Energy Solution, Ltd., Seoul 07335 (KR)
(72) Inventor: AHN, Moon Youl, Daejeon 34122 (KR)
(74) Representative: Plasseraud IP
(86) International application number: PCT/KR2022/004489
(87) International publication number: WO 2023/277305

(57) **Abstract**

A battery pack according to the present disclosure includes a lower pack frame to which a plurality of battery modules are mounted; and an upper pack frame located in the upper part of the battery module, wherein at least two inner beams and side frames that serve as venting paths through which gas generated from the battery module moves are formed on the bottom surface of the lower pack frame, wherein the side frame extends along the edge of the bottom surface of the lower pack frame, wherein the at least two inner beams are spaced apart from each other, wherein an end part of the inner beam and an inner surface of the side frame are in contact with each other, with at least one first connection part being formed in which the end part of the inner beam and the inner surface of the side frame communicate with each other, and wherein the inner beam includes at least one venting hole passing through a side surface of the inner beam.

## Description

### [TECHNICAL FIELD]

### Cross Citation with Related Application(s)

This application claims the benefit of Korean Patent Application No. 10-2021-0085132 filed on June 29, 2021 with the Korean Intellectual Property Office, the content of which is incorporated herein by reference in its entirety.

The present disclosure relates to a battery pack and a device including the same, and more particularly, to a battery pack in which when high-temperature gas and flame are generated in some battery modules, the generated high-temperature gas and flame are cooled through a venting path formed relatively long, and the cooled gas and flame are safely discharged to the outside of the battery pack, and a device including the same.

### [BACKGROUND]

Secondary batteries, which are easily applied to various product groups and has electrical characteristics such as high energy density, are universally applied not only for a portable device but also for an electric vehicle (EV) or a hybrid electric vehicle (HEV), an energy storage system or the like, which is driven by an electric driving source. Such secondary battery is attracting attention as a new environment-friendly energy source for improving energy efficiency since it gives a primary advantage of remarkably reducing the use of fossil fuels and also does not generate by-products from the use of energy at all.

Currently commercialized secondary batteries include a nickel cadmium battery, a nickel hydrogen battery, a nickel zinc battery, and a lithium secondary battery. Among them, the lithium secondary battery has come into the spotlight because they have advantages, for example, hardly exhibiting memory effects compared to nickel-based secondary batteries and thus being freely charged and discharged, and having very low self-discharge rate and high energy density.

Generally, the lithium secondary battery may be classified based on the shape of the exterior material into a cylindrical or prismatic secondary battery in which the electrode assembly is mounted in a metal can, and a pouch-type secondary battery in which the electrode assembly is mounted in a pouch made of an aluminum laminate sheet.

Recently, along with a continuous rise of the necessity for a large-capacity secondary battery structure, including the utilization of the secondary battery as an energy storage source, there is a growing demand for a battery pack of a medium- and large-sized module structure which is an assembly of battery modules in which a plurality of secondary batteries are connected in series or in parallel. In such a battery module, a plurality of battery cells are connected to each other in series or in parallel to form a battery cell stack, thereby improving capacity and output. In addition, a plurality of battery modules may be mounted together with various control and protection systems such as a BMS (battery management system) and a cooling system to form a battery pack.

Further, the battery pack consists of a structure made by combining a plurality of battery modules, and when some battery modules become an overvoltage, overcurrent or overheat state, the safety and operating efficiency of the battery pack may be problematic.

In particular, when the high-temperature gas and discharge material generated during thermal runaway of the battery module are directly discharged to the outside, there is a problem that high-temperature gas and discharge materials come into contact with oxygen and cause a flame. Thereby, when high-temperature gas and flam are generated in some battery modules, the high-temperature gas and flame need to be sufficiently cooled before being discharged to the outside, thereby minimizing the possibility of flames when discharged to the outside.

### [DETAILED DESCRIPTION OF THE INVENTION]

### [Technical Problem]

It is an object of the present disclosure to provide a battery pack in which when high-temperature gas and flame are generated in some battery modules, the generated high-temperature gas and flame are cooled through a venting path formed relatively long, and the cooled gas and flame are safely discharged to the outside of the battery pack, and a device including the same.

The objects of the present disclosure are not limited to the aforementioned objects, and other objects which are not described herein should be clearly understood by those skilled in the art from the following detailed description and the accompanying drawings.

### [Technical Solution]

According to an embodiment of the present disclosure, there is provided a battery pack comprising: a lower pack frame to which a plurality of battery modules are mounted; and an upper pack frame located in the upper part of the battery module, wherein at least two inner beams and side frames that serve as venting paths through which gas generated from the battery module moves are formed on the bottom surface of the lower pack frame, wherein the side frame extends along the edge of the bottom surface of the lower pack frame, wherein the at least two inner beams are spaced apart from each other, wherein an end part of the inner beam and an inner surface of the side frame are in contact with each other, with at least one first connection part being formed in which the end part of the inner beam and the inner surface of the side frame communicate with each other, and wherein the inner beam includes at least one venting hole passing through a side surface of the inner beam.

The plurality of battery modules may be partitioned from each other by the side frame and the at least two inner beams.

A pair of battery modules may be arranged between the side frame and the pair of inner beams located adjacent to each other among the at least two inner beams.

The at least one venting hole may be located between the pair of battery modules.

The side frame may include a pair of first side beams extending along the longitudinal direction of the lower pack frame, and a pair of second side beams extending along the width direction of the lower pack frame.

The inner beam extends along a longitudinal direction of the second side beam, and the first connection portion may be located on a surface in which an end part of the inner beam and an inner surface of the first side beam are in contact with each other.

The battery pack may include a second connection part in which mutual contact surfaces between the first side beam and the second side beam are communicated with each other.

At least one venting unit may be formed in one second side beam among the pair of second side beams.

The side frame includes a blocking part located on one first side beam among the pair of first side beams, with the inside of the first side beam being closed, and the blocking part may close the second connection part located adjacent to the second side beam on which the venting unit is formed.

The inner beam includes a first inner partition and a second inner partition extending along a longitudinal direction of the inner beam, the second inner partition is located on the first inner partition, and the at least one venting hole may be located between the first inner partition and a bottom surface of the inner beam.

Both end parts of the first inner partition are respectively spaced apart from each other on both side surfaces of the inner beam, both end parts of the second inner partition are in contact with the side surfaces of the inner beam, respectively, with a central part of the second inner partition being opened toward the first inner partition, and the first connection part is formed on both side surfaces of the inner beam located between both end parts of the second inner partition and the upper surface of the inner beam, respectively.

One end part of the first inner partition is in contact with one side surface of the inner beam, with the other end part of the first inner partition being spaced apart from the opposite side surface of the inner beam, one end part of the second inner partition is in contact with the opposite side surface of the inner beam, with the other end part of the second inner partition being spaced apart from one side surface of the inner beam, in the inner beam located between the end part of the second inner partition and the upper surface of the inner beam, the first connection part is formed on the opposite side surface of the inner beam, with one side surface of the inner beam being closed.

The opposite side surface of the inner beam may be located adjacent to the first side beam on which the blocking part is formed among the pair of first side beams.

The first side beam includes a first side surface partition and a second side surface partition extending along a longitudinal direction of the first side beam, the second side surface partition is located on the first side surface partition, both end parts of the first side surface partition are in contact with both side surfaces of the first side beam, respectively, and in a first side beam in which the blocking part is located among the pair of first side beams, the first connection part is located between the first side surface partition and the second side surface partition.

Both end parts of the second side partition are in contact with both side surfaces of the first side beam, respectively, with a central part of the second side surface partition being opened toward the first side surface partition, and the second connection part may be formed on both side surfaces of the first side beam located between the second side surface partition and the upper surface of the first side beam, respectively.

One end part of the second side surface partition is in contact with one side surface of the first side beam, with the other end part of the second side surface partition being spaced apart from the other side surface of the first side beam, and in the first side beam in which the blocking part is located among the pair of first side beams, the second connection part is formed on both side surfaces of the first side beam located between the end part of the second side surface partition and the upper surface of the first side beam, with the blocking part closing the second connection part adjacent to the other side surface of the first side beam.

In a first side beam in which the blocking part is not located among the pair of first side beams, both end parts of the first side surface partition and the second side surface partition may be in contact with both side surfaces of the first side beam, respectively.

The battery pack may include a second connection part in which mutual contact surfaces between the first side beam and the second side beam are communicated with each other, and the second connection part may be located between one end part of the second side surface partition wall and an upper surface of the first side beam.

A venting valve may be inserted into the venting hole.

According to another embodiment of the present disclosure, there is provided a device comprising the above-mentioned battery pack.

### [Advantageous Effects]

According to embodiments of the present disclosure, there can be provided a battery pack and a device including the same in which the venting path formed by the inner frame and the side frame is formed relatively long, so that when high-temperature gas and flame are generated in some battery modules, the generated high-temperature gas and flame are cooled through a venting path formed relatively long, and the cooled gas and flam can be safely discharged to the outside of the battery pack.

The effects of the present disclosure are not limited to the effects mentioned above and additional other effects not described above will be clearly understood from the description of the appended claims by those skilled in the art.

### [BRIEF DESCRIPTION OF THE DRAWINGS]

Fig. 1 is a perspective view of a battery pack according to an embodiment of the present disclosure;
Fig. 2 is an exploded perspective view of the battery pack of Fig. 1;
Fig. 3 is a diagram showing a gas discharge path on the basis of the upper surface of the battery pack of Fig. 1;
Fig. 4 is a cross-sectional view taken along the cutting line A-A' of Fig. 2;
Fig. 5 is a cross-sectional view taken along the cutting line B-B' of Fig. 2;
Fig. 6 is a cross-sectional view taken along the cutting line C-C' of Fig. 2;
Fig. 7 is a diagram showing a venting valve that is inserted into a venting hole included in the battery pack of Fig. 1;
Fig. 8 is a diagram showing a cross-section of a side frame or an inner beam included in the battery pack of Fig. 1;
Fig. 9 is a diagram showing a gas discharge path on the basis of the upper surface of the battery pack according to another embodiment of the present disclosure;
Fig. 10 is a cross-sectional view taken along the cutting line A-A' of Fig. 2;
Fig. 11 is a cross-sectional view taken along the cutting line B-B' of Fig. 2; and
Fig. 12 is a cross-sectional view taken along the cutting line C-C' of Fig. 2.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

Portions that are irrelevant to the description will be omitted to clearly describe the present disclosure, and same reference numerals designate same or like elements throughout the description.

Further, in the drawings, the size and thickness of each element are arbitrarily illustrated for convenience of description, and the present disclosure is not necessarily limited to those illustrated in the drawings. In the drawings, the thickness of layers, regions, etc. are exaggerated for clarity. In the drawings, for convenience of description, the thicknesses of some layers and regions are exaggerated.

Further, throughout the description, when a portion is referred to as "including" or "comprising" a certain component, it means that the portion can further include other components, without excluding the other components, unless otherwise stated.

Further, throughout the description, when referred to as "planar", it means when a target portion is viewed from the upper side, and when referred to as "cross-sectional", it means when a target portion is viewed from the side of a cross section cut vertically.

Hereinafter, a battery pack according to an embodiment of the present disclosure will be described.

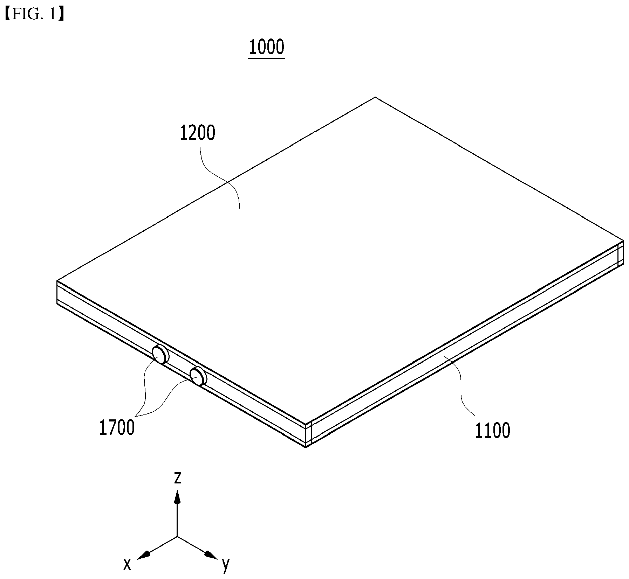

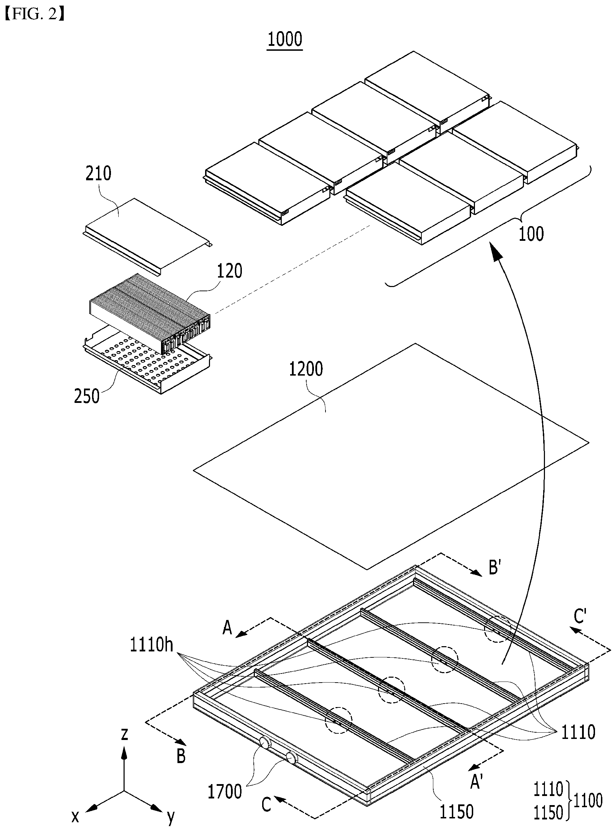

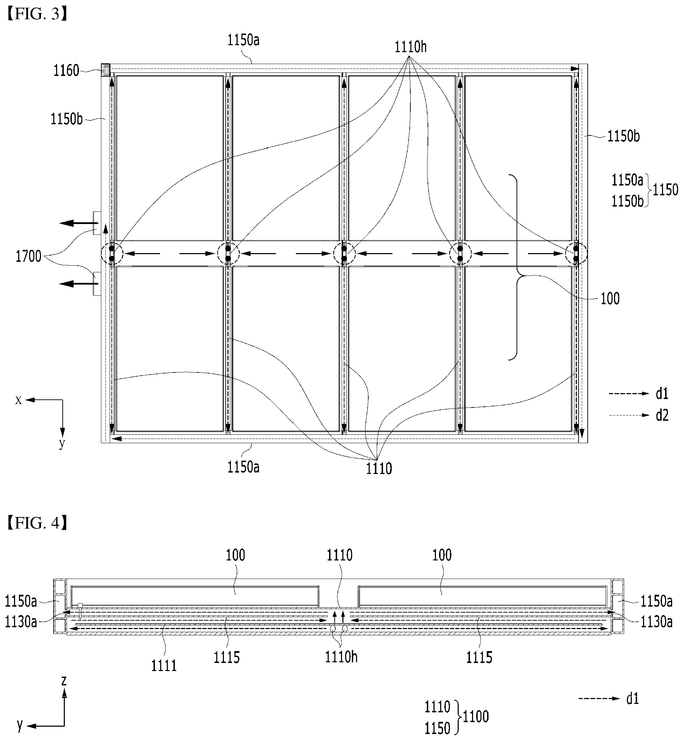

Fig. 1 is a perspective view of a battery pack according to an embodiment of the present disclosure. Fig. 2 is an exploded perspective view of the battery pack of Fig. 1. Fig. 3 is a diagram showing a gas discharge path on the basis of the upper surface of the battery pack of Fig. 1.

Referring to Figs. 1 and 2, the battery pack 1000 according to the present embodiment may include a lower pack frame 1100 to which a plurality of battery modules 100 are mounted; and an upper pack frame 1200 located in the upper part of the battery module 100. Here, the lower pack frame 1100 and the upper pack frame 1200 can be coupled to each other by a method such as welding to seal the inside of the battery pack 1000.

The battery module 100 may include a battery cell stack 120 in which a plurality of battery cells are stacked in a preset direction, and module frames 210 and 250. The module frames 210 and 250 may include an upper frame 210 and a lower pack frame 250, and the battery cell stack 120 may be mounted between the upper frame 210 and the lower pack frame 250 to configure the battery module 100. However, the module frames 210 and 250 are not limited to the contents describe above, and may be a mono frame in the form of a metal plate in which upper and lower surfaces and both side surfaces are integrated.

Here, the battery cell is not particularly limited to the type thereof, and thus may be a pouch-type secondary battery or a prismatic secondary battery, but the pouch-type secondary battery is preferred.

The lower pack frame 1100 is configured such that at least two inner beams 1110 and a side frame 1150 are formed on the bottom surface of the lower pack frame 1100. Here, at least two inner beams 1110 and the side frame 1150 may be a venting path through which the gas generated in the battery module 100 moves. More specifically, the lower pack frame 1100 includes a side frame 1150 and at least two inner beams 1110 protruding from the bottom surface of the lower pack frame 1100 toward the upper frame 1200. Here, the bottom surface of the lower pack frame 1100 and at least two inner beams 1110 and side frames 1150 can be coupled to each other by a method such as welding.

In one example, the inner beam 1110 and the side frame 1150 may be formed of a tubular extrusion-reinforced beam. Here, the extrusion-reinforced beam may be made of aluminum (Al). However, the present disclosure is not limited thereto, and any tubular material having excellent heat transfer efficiency, while securing rigidity and allowing gas and/or flame to move inside can be included in the present embodiment.

Further, the plurality of battery modules 100 may be partitioned from each other by the side frame 1150 and at least two inner beams 1110. In other words, the plurality of battery modules 100 may be respectively arranged in a region located between the side frame 1150 and the at least two inner beams 1110. More specifically, in the battery pack 1000, a pair of battery modules 100 may be arranged between a side frame 1150 and a pair of inner beams 1110 located adjacent to each other among the at least two inner beams 1110. Here, the pair of battery modules 100 may be spaced apart from each other, but may be arranged in a direction facing each other. In one example, the pair of battery modules 100 may be arranged in a direction in which end plates (not shown) included in each battery module 100 face each other.

Thereby, the plurality of battery modules 100 are surrounded by the at least two inner beams 1110 and the side frame 1150, so that each battery module 100 can be protected from an external impact.

The side frame 1150 may extend along each edge of the bottom surface of the lower pack frame 1100. More specifically, it may extend along each corner of the bottom surface of the lower pack frame 1100. Here, the upper surface of the side frame 1150 may be in contact with the upper pack frame 1200. At this time, the upper surface of the side frame 1150 and the upper pack frame 1200 can be coupled to each other by a method such as welding, thereby sealing the inside of the battery pack 1000.

At least two inner beams 1110 may be spaced apart from each other. Here, the distance at which at least two inner beams 1110 are spaced apart may be equal to or greater than the size of the battery module 100.

Further, an end part of the inner beam 1110 may be in contact with the inner surface of the side frame 1150. More specifically, both end parts of the inner beam 1110 may be in contact with the inner surface of the side frame 1150, respectively. Here, at least one first connection portion 1130a (Fig. 4 ) in which an end part of the inner beam 1110 and an inner surface of the side frame 1150 communicate with each other may be formed. More specifically, the first connection part 1130a (Fig. 4 ) may be formed on at least a part of the surface where an end part of the inner beam 1110 and an inner surface of the side frame 1150 are in contact with each other.

Further, in the battery pack 1000 according to the present embodiment, the inner beam 1110 may include at least one venting hole 11 10h passing through a side surface of the inner beam 1110. More specifically, the venting hole 1110h may be a hole formed by removing a part of a side surface of the inner beam 1110.

In one example, as shown in Fig. 2, at least one venting hole 1110h may be located between a pair of battery modules 100. In other words, in the inner beam 1110, at least one venting hole 1110h may be formed at a position spaced apart between the pair of battery modules 100. However, the location of the venting hole 1110h is not limited thereto, and may be included in the present embodiment as long as it is a location where the gas and flame generated from the battery module 100 can be easily discharged.

In one example, as shown in Fig. 2, the venting hole 1110h may have a circular shape. However, the shape of the venting hole 1110h is not limited thereto, and can be included in the present embodiment as long as it is a shape that allows the gas and flame generated in the battery module 100 to be easily discharged.

In one example, as shown in Fig. 2, at least one venting hole 1110h may be arranged side by side in the longitudinal direction of the inner beam 1110. However, the arrangement of the venting hole 1110h is not limited thereto, and can be included in the present embodiment as long as it is an arrangement that allows the gas and flame generated in the battery module 100 to be easily discharged.

That is, referring to Figs. 1 to 3, in the battery pack 1000 according to the present embodiment, when an ignition phenomenon occurs in some battery modules 100, the generated high-temperature gas and/or flame may be flown into the inner beam 1110 according to a pressure difference through the venting hole 1110h formed in the inner beam 1110. After that, the high-temperature gas and/or flame flown into the inner beam 1110 may be flown into the side frame 1150 by a pressure difference along the first path d1 through the first connection part 1130a.

Thereby, the inner beam 1110 may form a venting path, and the high-temperature gas and/or flame moving along the venting path may be cooled in contact with the inner surface of the inner beam 1110.

Referring to Fig. 3, the side frame 1150 may include a pair of first side beams 1150a extending along the longitudinal direction (x-axis direction) of the lower pack frame 1100 and a pair of second side beams 1150b extending along the width direction (y-axis direction) of the lower pack frame 1100. Here, the pair of first side beams 1150a and the pair of second side beams 1150b may be integrated with each other, or alternatively, may be coupled to each other by a method such as welding.

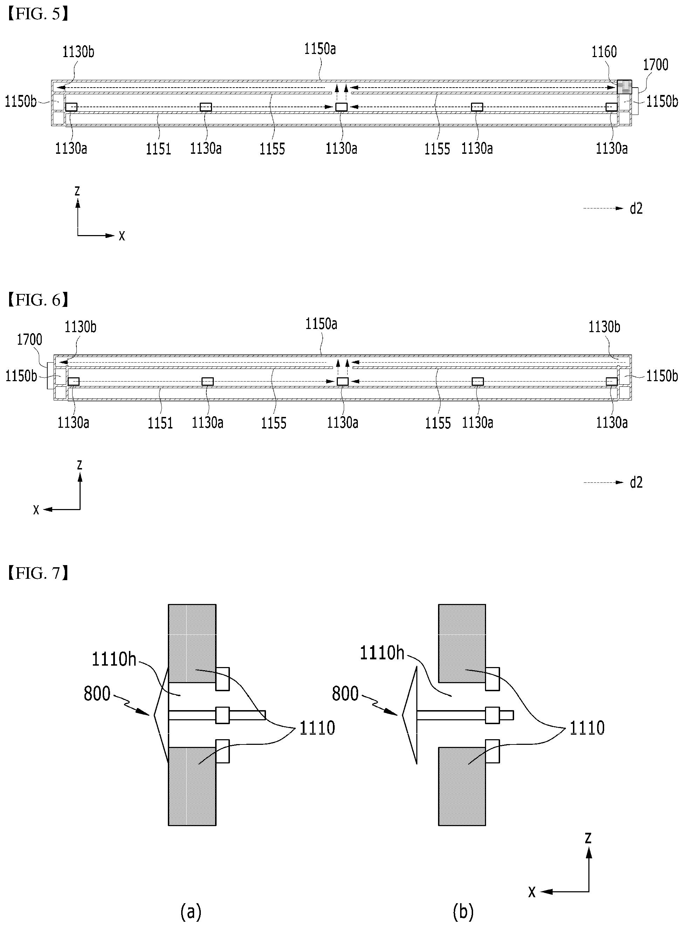

Further, at least a part of the mutual contact surfaces between the pair of first side beams 1150a and the pair of second side beams 1150b may be communicated with each other. In particular, it includes a second connection part 1130b (Fig. 5) in which mutual contact surfaces between the first side beam 1150a and the second side beam 1150b are communicated with each other. More specifically, the second connection part 1130b (Fig. 5) may be formed on at least a part of the surfaces where the first side beam 1150a and the second side beam 1150b are in contact with each other.

Further, the inner beam 1110 may extend along the longitudinal direction of the second side beam 1150b. More specifically, at least one first connection part 1130a (Fig. 4) may be located on a surface in which an end of the inner beam 1110 and an inner surface of the first side beam 1150a are in contact with each other. More specifically, the first connection part 1130a (Fig. 4) may be formed on at least a part of a surface where an end part of the inner beam 1110 and an inner surface of the first side beam 1150a are in contact with each other.

Further, referring to Fig. 3, at least one venting unit 1700 may be formed in one second side beam among the pair of second side beams 1150b. Here, the venting unit 1700 may be a member that opens/closes or ruptures according to the pressure inside the battery pack 1000.

In one example, the venting unit 1700 is connected to the inside of the battery pack 1000, but can be composed of a member that is opened to the outside only when the pressure inside the battery pack 1000 exceeds a certain pressure, and is closed when the pressure drops below a certain level. In one example, the venting unit 1700 may be a relief valve. However, the venting unit 1700 is not limited thereto, and can be included in the present embodiment as long as it is a member that can be opened and closed according to the pressure of the battery pack 1000.

In another example, the venting unit 1700 may rupture when the pressure inside the battery pack 1000 reaches a certain level or higher. More specifically, the venting unit 1700 may include a rupture surface (not shown) configured to rupture when the pressure of the inflowing gas exceeds a certain pressure, such as a rupture disc. However, the structure of the venting unit 1700 is not limited thereto, and may be included in the present embodiment as long as it is configured to communicate with the side frame 1150 to allow the inner gas to be discharged to the outside.

That is, referring to Fig. 3, the high-temperature gas and/or flame that has flowed into the first side beam 1150a among the side frame 1150 can be moved to the second side beam 1150b through the second connection part 1130b (Fig. 5). That is, the high-temperature gas and/or flame that has flown into the side frame 1150 moves inside the side frame 1150 by the pressure difference along the second path d2, and may be finally discharged to the outside via the venting unit 1700 in the side frame 1150 in which the venting unit 1700 is located.

Thereby, the side frame 1150 may form a venting path, the high-temperature gas and/or flame moving along the venting path may be cooled in contact with the inner surface of the side frame 1150, and the gas and/or flame cooled by the venting unit 1700 can be safely discharged to the outside.

In particular, referring to Fig. 3, the side frame 1150 may include a blocking part 1160 located on one first side beams 1150a among the pair of first side beams 1150a. Here, the blocking part 1160 may mean a part in which the inside of the first side beam 1150a is closed. In other words, the blocking part 1160 may mean a part which the inside of the first side beam 1150a is blocked and thus, the gas and/or flame moving into the first side beam 1150a cannot move.

More specifically, the blocking part 1160 may close one of the second connection parts 1130b (Fig. 5) formed on a surface where the first side beam 1150a and the second side beam 1150b are in contact with each other. In other words, the blocking part 1160 can block a high temperature gas and/or flame that may be flown in through the second connection part 1130b (Fig. 5) located between the first side beam 1150a and the second side beam 1150b.

In accordance with the above configuration, in the battery pack 1000 according to the present embodiment, when an ignition phenomenon occurs in some battery modules 100, the generated high-temperature gas and/or flame may be flown into the venting path formed by the inner beam 1110 and the side frame 1150, wherein a blocking part 1160 is formed in the first side beam 1150a, thereby being able to restrict and guide the moving direction of the high-temperature gas and/or flame.

That is, as shown in Fig. 3, the high-temperature gas and/or flame moving toward the blocking part 1160 formed in the first side beam 1150a is limited in movement by the blocking part 1160 and can be guided to move in the opposite direction. In other words, the high-temperature gas and/or flame may extend the time that the high-temperature gas and/or flame stay in the venting path by the blocking part 1160, so that the cooling performance of the gas and/or the flame can be further improved.

In particular, the blocking part 1160 is located in one first side beam 1150a among the pair of first side beams 1150a, but can be located adjacent to the second side beam 1150b in which the venting part 1700 is formed. More specifically, the blocking part 1160 can close the second connection part 1130b (Fig. 5) located adjacent to the second side beam 1150b in which the venting unit 1700 is formed among the second connection parts 1130b (Fig. 5).

Thereby, as shown in Fig. 3, the high-temperature gas and/or flame flowing-in through the venting hole 1100h moves toward the first side beam 1150a in which the blocking part 1160 is located, wherein movement is restricted by the blocking part 1160, and the high-temperature gas and/or flame moves counterclockwise along the side frame 1150. However, the moving direction of the high-temperature gas and/or flame may be in the opposite direction depending on the location of the blocking part 1160. That is, according to the present embodiment, the position of the blocking part 1160 is located adjacent to the venting unit 1700, so that the time required for the high-temperature gas and/or flame to reach the venting unit 1700 can be extended. In other words, the present embodiment can further extend the time that the high-temperature gas and/or flame stay in the venting path, and thus, can further improve the cooling performance of the gas and/or the flame.

Fig. 4 is a cross-sectional view taken along the cutting line A-A' of Fig. 2. Fig. 5 is a cross-sectional view taken along the cutting line B-B' of Fig. 2. Fig. 6 is a cross-sectional view taken along the cutting line C-C' of Fig. 2.

Referring to Figs. 3 and 4, the inner beam 1110 includes a first inner partition 1111 and a second inner partition 1115 extending along the longitudinal direction of the inner beam 1110. More specifically, the second inner partition 1115 may be located on the first inner partition 1111. Here, the first inner partition 1111 and the second inner partition 1115 may be spaced apart from each other.

In particular, in the inner beam 1110, at least one venting hole 1110h may be located between the first inner partition 1111 and the bottom surface of the inner beam 1110. More specifically, the at least one venting hole 1110h may be located at a center between the first inner partition 1111 and the bottom surface of the inner beam 1110.

Further, both end parts of the first inner partition 1111 may be spaced apart from each other on both side surfaces of the inner beam 1110. In other words, a high-temperature gas and/or flame may move along the first path d1 between both end parts of the first inner partition 1111 and both side parts of the inner beam 1110.

Further, both end parts of the second inner partition 1115 may be in contact with the side surface of the inner beam 1110, wherein the central part of the second inner partition 1115 may be opened toward the first inner partition 1111. In other words, the high-temperature gas and/or flame that has moved between both end parts of the first inner partition 1111 and both side parts of the inner beam 1110 can move long the first path d1 toward the central part of the second inner partition 1115.

Further, the first connection part 1130a may be formed on both side surfaces of the inner beam 1110 located between both end parts of the second inner partition 1115 and the upper surface of the inner beam 1110, respectively. In other words, the high-temperature gas and/or flame moved between the second inner partitions 1115 moves between the second inner partition 1115 and the upper surface of the inner beam 1110, and thus can flow into the first side beam 1150a via the first connection part 1130a along the first path d1.

Thereby, as shown in Figs. 3 and 4, the high-temperature gas and/or flame that has flowed into the inner beam 1110 via the venting hole 1100h is moved through the venting path formed relatively long by the first inner partition 1111 and the second inner partition 1115. That is, in the inner beam 1110, the time that the high-temperature gas and/or flame stay in the venting path can be further extended by the venting path formed relatively long, and thus can further improve the cooling performance of the gas and/or the flame.

However, in another example, the inner beam 1110 may be configured such that instead of the first inner partition 1111 and the second inner partition 1115, a member such as a metal tube or a corrugated tube may be inserted in the inner beam 1110 in a zigzag manner. Thereby, the length of the venting path formed inside the inner beam 1110 may be further extended, and therefore, the cooling performance of the gas and/or flame can be more effectively improved.

Referring to Figs. 3, 5 and 6, the first side beam 1150a includes a first side partition 1151 and a second side partition 1155 extending along the longitudinal direction of the first side beam 1150a. More specifically, the second side partition 1155 may be located on the first side partition 1151. Here, the first inner partition 1111 and the second inner partition 1115 may be spaced apart from each other.

In particular, in the first side beam 1150a in which the blocking part 1160 is located among the pair of first side beams 1150a, a first connection part 1130a may be located between the first side partition 1151 and the second side partition 1155. Further, both end parts of the first side partition 1151 may be in contact with both side parts of the first side beam 1150a. Here, regardless of whether or not the blocking part 1160 is located on the pair of first side beams 1150a, a first connection part 1130a may be located between the first side partition 1151 and the second side partition 1155 of the first side beam 1150a. That is, the high-temperature gas and/or flame that has flowed into the inner beam 1110 is flowed in between the first side partition 1151 and the second side partition 1155 via the first connection part 1130a, so that a high-temperature gas and/or flame can move along the second path d2.

Further, both end parts of the second side partition 1155 are in contact with both side parts of the first side beam 1150a, respectively, wherein a central part of the second side partition 1155 may be opened toward the first side partition 1150a. In other words, the high-temperature gas and/or flame that has moved between the first side partition 1151 and the second side partition 1155 can move along the second path d2 toward the central part of the second side partition 1155.

Further, the second connection part 1130b may be formed on both side surfaces of the first side beam 1150a located between the second side partition wall 1155 and the upper surface of the first side beam 1150a, respectively. In other words, the high-temperature gas and/or flame that has moved between the second side partition 1155 moves between the second side partition 1155 and the upper surface of the first side beam 1150a, and may flow into the second side beam 1150b via the second connection part 1130b along the second path d2.

Further, as described above, in the first side beam 1150a in which the blocking part 1160 is located among the pair of first side beams 1150a, the blocking part 1160 may close one of the second connection parts 1130b formed on a surface where the first side beam 1150a and the second side beam 1150b are in contact with each other. More preferably, as shown in Fig. 5, the blocking part 1160 can close the second connection part 1130b (Fig. 5) located adjacent to the second side beam 1150b in which the venting part 1700 is formed among the second connection parts 1130b.

Unlike the same, as shown in Fig. 6, in the first side beam 1150a in which the blocking part 1160 is not located among the pair of first side beams 1150a, the blocking part 1160 may not close the second connection part 1130b. In other words, in the first side beam 1150a in which the blocking part 1160 is not located among the pair of first side beams 1150a, the high-temperature gas and/or flame that has flown in along the second connection part 2130b moves to the second path d2 along the upper surface of the first side beam 2150a and the second side partition 2155, and can move toward another connection part 2130b.

Thereby, as shown in Figs. 3, 5 and 6, the high-temperature gas and/or flame that has flowed into the first side beam 1150a via the first connection part 1130a is moved through a venting path formed relatively long by the first side partition 1151 and the second side partition 1155. That is, the time required to stay in the venting path can be further extended by the venting path formed relatively long by the high-temperature gas and/or flame in the side frame 1150, and thus the cooling performance of the gas and/or the flame can be improved more effectively.

However, in another example, the first side beam 1150a may be configured such that instead of the first side bulkhead 1151 and the second side bulkhead 1155, a member such as a metal tube or a corrugated tube can be inserted in the first side beam 1150a in a zigzag manner. Thereby, it is possible to further extend the length of the venting path formed inside the first side beam 1150a, and thus, the cooling performance of the gas and/or the flame can be improved more effectively.

Fig. 7 is a diagram showing a venting valve that is inserted into a venting hole included in the battery pack of Fig. 1.

Referring to Figs. 1, 2 and 7, the venting valve 800 may be inserted into the venting hole 1110h. In oner example, the venting valve 800 is connected to the inside of the venting hole 1110h, and it may be composed of a member that is closed when the pressure in the battery pack 1000 drops below a certain pressure as shown in Fig. 6(a), and is opened toward the outside only when the pressure is greater than or equal to a certain level as shown in Fig. 6(b). In one example, the venting valve 800 may be a relief valve. However, the venting valve 800 is not limited thereto, and can be included in the present embodiment as long as it is a member that can be opened or closed according to the pressure of the battery pack 1000.

Thereby, in the battery pack 1000 according to the present embodiment, the venting valve 800 is inserted into the venting hole 1110h, whereby when the battery module 100 operates normally, the venting hole 1110h is closed to block the inflow of external oxygen, and when an ignition phenomenon occurs in the battery module 100, the venting hole 1110h is opened so that a high-temperature gas and/or a flame can be effectively discharged.

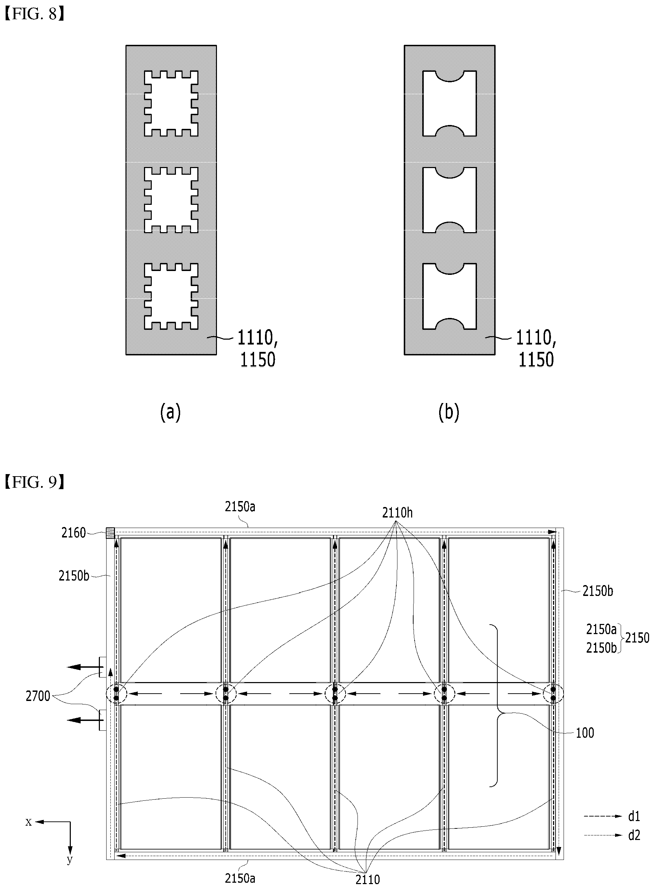

Fig. 8 is a diagram showing a cross-section of a side frame or an inner beam included in the battery pack of Fig. 1.

Referring to Figs. 1 and 8, in the battery pack 1000 according to the present embodiment, the inside of the inner beam 1110 and the side frame 1150 has a tubular shape, wherein a plurality of grooves may be formed as shown in Fig. 7(a) or a protrusion may be formed as shown in Fig. 7(b). However, the internal shape of the inner beam 1110 and the side frame 1150 is not limited thereto, and can be included in the present embodiment as long as it is a shape that increases the contact area with high-temperature gas and/or flame.

Thereby, in the battery pack 1000 according to the present embodiment, when it has a predetermined shape on the inside of the inner beam 1110 and the side frame 1150 as shown in Fig. 8, it is possible to further increase the contact area between the inside of the inner beam 1110 and the side frame 1150 and the high-temperature gas and/or flame, so that the high-temperature gas and/or flame can be more effectively cooled by the inner surface of the side frame 1150 of the inner beam 1110.

Next, the gas discharge path, the inner beam 2110, and the side frame 2150 according to the battery pack according to another embodiment of the present disclosure will be mainly described. However, the battery pack according to the present embodiment may be described in mostly the same manner as in the battery pack 1000 described above, and the inner beam 2110 and the side frame 2150 included in the lower pack frame 2100 will be mainly described on the basis of parts that are different from the battery pack 1000.

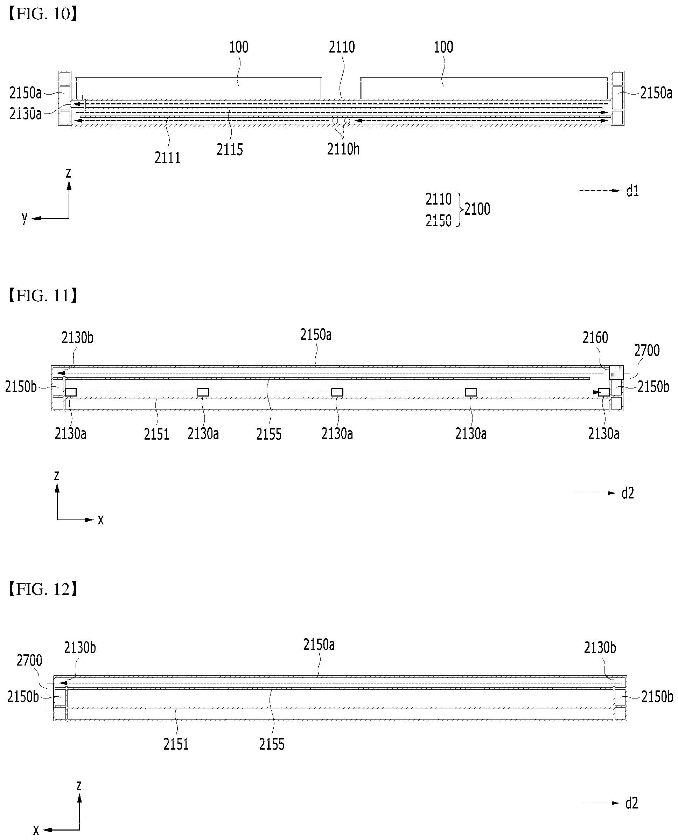

Fig. 9 is a diagram showing a gas discharge path on the basis of the upper surface of the battery pack according to another embodiment of the present disclosure. Fig. 10 is a cross-sectional view taken along the cutting line A-A' of Fig. 2. Fig. 11 is a cross-sectional view taken along the cutting line B-B' of Fig. 2. Fig. 12 is a cross-sectional view taken along the cutting line C-C' of Fig. 2.

Referring to Figs. 9 and 10, unlike those shown in Figs. 3 and 4, in the inner beam 2110, one end part of the first inner partition 2111 is in contact with one side of the inner beam 2110, wherein the other end part of the first inner partition 2115 may be spaced apart from the opposite side surface of the inner beam 2110 from each other. In other words, a high-temperature gas and/or flame may move along the first path d1 between the other end part of the first inner partition 2111 and the opposite side surface of the inner beam 2110.

Further, in the inner beam 2110, one end part of the second inner partition 2115 is in contact with the opposite side surface of the inner beam 2111, wherein the other end part of the second inner partition 2115 may be spaced apart from one side surface of the inner beam 2111. In other words, the high-temperature gas and/or flame that has moved between the other end part of the first inner partition 2111 and the opposite side surface of the inner beam 2110 may be moved between one end part of the second inner partition 2115 and one side surface of the inner beam 2110.

However, the structure of the inner beam 2110 is not limited thereto, and at least one partition may be inserted between the first inner partition 2111 and the second inner partition wall 2115.

Further, in the inner beam 2110 located between the end part of the second inner partition 2115 and the upper surface of the inner beam 2111, the first connection part 2130a is formed on the opposite side surface of the inner beam 2111, wherein one side surface of the inner beam 2111 may be closed. In other words, the high-temperature gas and/or flame moved between one end part of the second inner partition 2115 and one side surface of the inner beam 2110 moves between the second inner partition 2115 and the upper surface of the inner beam 2110, and can flow into the first side beam 2150a via the first connection part 2130a located on the opposite side surface of the inner beam 2111 along the first path d1.

Thereby, similarly to those shown in Figs. 9 and 10, the high-temperature gas and/or flame that has flowed into the inner beam 2110 via the venting hole 2100h is moved through the venting path formed long by the first inner partition 2111 and the second inner partition 2115. That is, in the inner beam 2110, it is possible to more effectively extend the time that the high-temperature gas and/or flame stay in the venting path by the venting path formed long, and therefore, the cooling performance of the gas and/or the flame can be improved more effectively.

In particular, in the present embodiment, the opposite side surface of the inner beam 2111 may be located adjacent to the first side beam 2150a in which the blocking part 2115 is formed among the pair of first side beams 2150a. In other words, the first connection part 1130a located on the opposite side surface of the inner beam 2111 may be located adjacent to the first side beam 2150a in which the blocking part 2115 is formed among the pair of first side beams 2150a. On the contrary, between one side surface of the inner beam 2111 and the first side beam 2150a in which the blocking part 2115 is not formed among the pair of first side beams 2150a is closed, and thus, the high-temperature gas and/or flame cannot move.

Thereby, in the present embodiment, a connection part 2130a is formed on one of the side surfaces of the inner beam 2110,and the other one is closed, so that the venting direction of the high-temperature gas and/or the flame can be guided in one direction. That is, as shown in Fig. 9, the moving direction of the high-temperature gas and/or the flame from the inner beam 2110 toward the first side beam 2150a may be guided in one direction along the first path d1.

In addition, the high-temperature gas and/or flame that has moved from the inner beam 2110 to the first side beam 2150a moves toward the first side beam 2150a where the blocking part 2115 is located, wherein movement is restricted by the blocking part 2160, and the high-temperature gas and/or flame moves in a counterclockwise direction along the side frame 1150. However, the moving direction of the high-temperature gas and/or flame may be in the opposite direction depending on the location of the blocking part 1160.

That is, the present embodiment can extend the time required for the high-temperature gas and/or flame to reach the venting unit 1700, that is, the time required to stay in the venting path, and therefore, the cooling performance of the gas and/or the flame can be improved more effectively.

Referring to Figs. 9, 11, and 12, unlike those shown in Figs. 3, 5 and 6, in the first side beam 1150a, one end part of the second side partition 2155 is in contact with one side surface of the first side beam 2150a, wherein the other end part of the second side partition 2155 may be spaced apart from the other side surface of the first side beam 2150a. In other words, the high-temperature gas and/or flame moved between the first side partition 2151 and the second side partition 2155 can move along the second path d2 between the other end part of the second side partition 1155 and the other side surface of the first side beam 2150a.

Further, referring to Fig. 11, in the first side beam 2150a in which the blocking part 2700 is located among the pair of first side beams 2150a, the second connection part 2130b is formed on both side surfaces of the first side beam 2150a located between the end part of the second side partition 2155 and the upper surface of the first side beam 2150a, respectively, wherein the blocking part 2160 can close the second connection part 2130b adjacent to the other side surface of the first side beam 2150a. In other words, the high-temperature gas and/or flame that has moved between the other end part of the second side partition 2155 and the other side surface of the first side beam 2150a are moved between the second side partition 2155 and the upper surfaces of the first side beam 2150a, and thus can be flown into the second side beam 2150b through the second connection part 2130b along the second path d2.

Further, referring to Fig. 12, in the first side beam 2150a in which the blocking part 2160 is not located among the pair of first side beams 2150a, both end parts of the first side partition 2151 and the second side partition 2155 may be in contact with both side surfaces of the first side beam 2150a, respectively. In other words, in the first side beam 2150a in which the blocking part 2160 is not located among the pair of first side beams 2150a, the high-temperature gas and/or flame flown-in along the second connection part 2130b may move along the upper surface of the first side beam 2150a and the second side partition 2155. However, the structure of the side beam 2150a in which the blocking part 2160 is not located among the pair of first side beams 2150a is not limited thereto, and it may have a structure in which the second side partition 2155 is omitted or a part of the second side partition 2155 is opened toward the first side partition 2151.

Further, referring to Figs. 10 and 12, as described above, the connection part 2130a may not be formed between the first side beam 2150a in which the blocking part 2160 is not located among the pair of first side beams 2150a and the inner beam 2110.

Thereby, as shown in Figs. 9, 11, and 12, only with respect to the surface where the first side beam 2150a in which the blocking part 2700 is located among the pair of first side beams 2150a and the inner beam 2110 are in contact with each other, a high-temperature gas and/or flame can be flown in through the first connection part 2130a, and the venting direction of the high-temperature gas and/or flame can be induced in one direction. That is, as shown in Fig. 9, the high-temperature gas and/or flame that has moved from the inner beam 2110 to the first side beam 2150a moves toward the first side beam 2150a where the blocking part 2115 is located, wherein movement is restricted by the blocking part 2160, and the high-temperature gas and/or flame moves counterclockwise along the side frame 2150. However, the moving direction of the high-temperature gas and/or the flame may be in the opposite direction depending on the location of the blocking part 2160.

That is, in the present embodiment, the time required for high-temperature gas and/or flame to reach the venting unit 2700, that is, the time required to stay in the venting path, can be further extended, and therefore, the cooling performance of the gas and/or flame can be more effectively improved.

A device according to an embodiment of the present disclosure includes the battery pack described above. Such a device can be applied to a vehicle means such as an electric bicycle, an electric vehicle, or a hybrid vehicle, but the present disclosure is not limited thereto, and is applicable to various devices that can use a battery module, which is also falls within the scope of the present disclosure.

Although preferred embodiments of the present disclosure have been described in detail above, the scope of the present disclosure is not limited thereto, and various modifications and improvements made by those skilled in the art using the basic concepts of the present disclosure, which are defined in the appended claims, also falls within the scope of the present disclosure.

### [Description of Reference Numerals]

100: battery module
120: battery cell stack
210: upper frame
250: lower frame
1000: battery pack
1100, 2110: lower pack frame
1110, 2110: inner beam
1150, 2150: side frame
1200: upper pack frame
1700, 2700: venting unit

## Claims

1. A battery pack comprising:
a lower pack frame to which a plurality of battery modules are mounted; and
an upper pack frame located in the upper part of the battery module,
wherein at least two inner beams and side frames that serve as venting paths through which gas generated from the battery module moves are formed on the bottom surface of the lower pack frame,
wherein the side frame extends along the edge of the bottom surface of the lower pack frame,
wherein the at least two inner beams are spaced apart from each other,
wherein an end part of the inner beam and an inner surface of the side frame are in contact with each other, with at least one first connection part being formed in which the end part of the inner beam and the inner surface of the side frame communicate with each other, and
wherein the inner beam comprises at least one venting hole passing through a side surface of the inner beam.

2. The battery pack of claim 1, wherein:
the plurality of battery modules are partitioned from each other by the side frame and the at least two inner beams.

3. The battery pack of claim 2, wherein:
a pair of battery modules is arranged between the side frame and the pair of inner beams located adjacent to each other among the at least two inner beams.

4. The battery pack of claim 3, wherein:
the at least one venting hole is located between the pair of battery modules.

5. The battery pack of claim 1, wherein:
the side frame comprises a pair of first side beams extending along the longitudinal direction of the lower pack frame, and a pair of second side beams extending along the width direction of the lower pack frame.

6. The battery pack of claim 5, wherein:
the inner beam extends along a longitudinal direction of the second side beam, and
the first connection portion is located on a surface in which an end part of the inner beam and an inner surface of the first side beam are in contact with each other.

7. The battery pack of claim 5, comprising:
a second connection part in which mutual contact surfaces between the first side beam and the second side beam are communicated with each other.

8. The battery pack of claim 7, wherein:
at least one venting unit is formed in one second side beam among the pair of second side beams.

9. The battery pack of claim 8, wherein:
the side frame comprises a blocking part located on one first side beam among the pair of first side beams, with the inside of the first side beam being closed, and
the blocking part closes the second connection part located adjacent to the second side beam on which the venting unit is formed.

10. The battery pack of claim 9, wherein:
the inner beam comprises a first inner partition and a second inner partition extending along a longitudinal direction of the inner beam,
the second inner partition is located on the first inner partition, and
the at least one venting hole is located between the first inner partition and a bottom surface of the inner beam.

11. The battery pack of claim 10, wherein:
both end parts of the first inner partition are respectively spaced apart from each other on both side surfaces of the inner beam,
both end parts of the second inner partition are in contact with the side surfaces of the inner beam, respectively, with a central part of the second inner partition being opened toward the first inner partition, and
the first connection part is formed on both side surfaces of the inner beam located between both end parts of the second inner partition and the upper surface of the inner beam, respectively.

12. The battery pack of claim 10, wherein:
one end part of the first inner partition is in contact with one side surface of the inner beam, with the other end part of the first inner partition being spaced apart from the opposite side surface of the inner beam,
one end part of the second inner partition is in contact with the opposite side surface of the inner beam, with the other end part of the second inner partition being spaced apart from one side surface of the inner beam,
in the inner beam located between the end part of the second inner partition and the upper surface of the inner beam, the first connection part is formed on the opposite side surface of the inner beam, with one side surface of the inner beam being closed.

13. The battery pack of claim 12, wherein:
the opposite side surface of the inner beam is located adjacent to the first side beam on which the blocking part is formed among the pair of first side beams.

14. The battery pack of claim 9, wherein:
the first side beam comprises a first side surface partition and a second side surface partition extending along a longitudinal direction of the first side beam,
the second side surface partition is located on the first side surface partition,
both end parts of the first side surface partition are in contact with both side surfaces of the first side beam, respectively, and
in a first side beam in which the blocking part is located among the pair of first side beams, the first connection part is located between the first side surface partition and the second side surface partition.

15. The battery pack of claim 14, wherein:
both end parts of the second side partition are in contact with both side surfaces of the first side beam, respectively, with a central part of the second side surface partition being opened toward the first side surface partition, and
the second connection part is formed on both side surfaces of the first side beam located between the second side surface partition and the upper surface of the first side beam, respectively.

16. The battery pack of claim 14, wherein:
one end part of the second side surface partition is in contact with one side surface of the first side beam, with the other end part of the second side surface partition being spaced apart from the other side surface of the first side beam, and
in the first side beam in which the blocking part is located among the pair of first side beams, the second connection part is formed on both side surfaces of the first side beam located between the end part of the second side surface partition and the upper surface of the first side beam, with the blocking part closing the second connection part adjacent to the other side surface of the first side beam.

17. The battery pack of claim 16, wherein:
in a first side beam in which the blocking part is not located among the pair of first side beams, both end parts of the first side surface partition and the second side surface partition are in contact with both side surfaces of the first side beam, respectively.

18. The battery pack of claim 1, wherein:
a venting valve is inserted into the venting hole.

19. A device comprising the battery pack of claim 1.
